# EUROPEAN PATENT APPLICATION

(11) **EP 4 793 229 A1**
(43) Date of publication of application: **19.08.2026**
(21) Application number: 24907657.1
(22) Date of filing: 29.07.2024
(51) Int. Cl.: C01B 3/24, C01B 3/30, C01B 3/26

(54) **METHOD AND APPARATUS FOR PRODUCING HYDROCARBONS**

(30) Priority: 20.12.2023 KR 20230186557
(71) Applicant: SK Innovation Co., Ltd., Seoul 03188 (KR)
(72) Inventor: JEON, Heejung, Daejeon 34124 (KR); KIM, Okyoun, Daejeon 34124 (KR); YUN, Dongmin, Daejeon 34124 (KR)
(74) Representative: Lorenz Seidler Gossel Part. mbB
(86) International application number: PCT/KR2024/011011
(87) International publication number: WO 2025/135370

(57) **Abstract**

The present disclosure provides a method for producing hydrocarbons, comprising steps of: (S1) heat-treating organic waste in a pyrolysis reactor to generate a first mixed gas; (S2) methane reforming the first mixed gas in a reforming reactor to generate a second mixed gas; (S3) separating the second mixed gas into a first stream containing carbon dioxide and a second stream containing hydrogen and carbon monoxide; (S4) injecting the first stream and carbon into a reverse Boudouard reactor and converting same into carbon monoxide through a reverse Boudouard reaction; (S5) generating a third mixed gas by mixing the second stream and the carbon monoxide converted in step (S4); (S6) producing synthesis gas from the third mixed gas through a water gas shift reaction; and (S7) producing hydrocarbons from the synthesis gas through a catalytic reaction, wherein the reforming reactor in step (S2) includes a fluidized bed reforming reactor and a fixed bed reforming reactor connected in parallel, and the first mixed gas is switched and supplied to the fluidized bed reforming reactor or the fixed bed reforming reactor.

## Description

### [Technical Field]

The present disclosure relates to a method and an apparatus for producing a hydrocarbon from organic wastes, and more particularly, to a method and an a-pparatus for producing a hydrocarbon, which may improve a production yield of a hydrocarbon from organic wastes and minimize carbon dioxide emissions.

### [Background Art]

Organic wastes may seriously damage the environment by decay when landfilled, and should be discarded through a prescribed treatment process after collecting them according to their properties when discarded. However, since simple disposal of the organic wastes requires securing treatment facilities and consuming a large amount of manpower and is more wasteful than productive, methods and technologies for recycling organic wastes have been developed in recent years. Representatively, a gasification process technology in which synthesis gas is produced using organic wastes and converted into a high value-added product for energization may be mentioned.

The gasification process generally refers to a series of processes of reacting carbonaceous raw materials such as coal, organic wastes, and biomass under the supply of water vapor, oxygen, carbon dioxide, or a mixture thereof to convert the raw materials into synthesis gas including hydrogen and carbon monoxide, in which the "synthesis gas" refers to a mixed gas which is usually produced by a gasification reaction and includes hydrogen and carbon monoxide and may further include carbon dioxide and/or methane.

The gasification process technology has expanded to a technology of producing fuels and raw materials of various compounds, and for example, the synthesis gas may be used as the raw material of a Fischer-Tropsch synthesis reaction to manufacture high value-added products such as light oil, heavy oil, diesel oil, wax, jet oil, and lubricant base oil. Besides, it is known that the technology may be applied to hydrogen power generation, ammonia manufacture, an oil refining process, and the like, using hydrogen in the synthesis gas which is the main product of the gasification process, and high value-added chemicals such as acetic acid, olefin, dimethyl ether, aldehyde, fuel, and an additive may be obtained, using methanol manufactured from the synthesis gas. However, since the synthesis gas produced from organic wastes has a very poor production yield, it is difficult to effectively produce a high value-added compound material from the synthesis gas.

Recently, as a process for manufacturing synthesis gas, a gasification process using a catalyst has been carried out, but due to the formation of coke and the like in the gasification process, the catalyst is deactivated causing process trouble by the deactivated catalyst during a continuous operation. In addition, for securing economic feasibility, relatively expensive catalysts need to be recovered, but in order to recover catalyst discharged in the state in which coke and the like are agglomerated, a plurality of subsequent processes (such as air burning) should be carried out, and thus, process efficiency is significantly deteriorated.

In addition, since the conventionally performed gasification process of organic wastes has a significantly low synthesis gas production yield of 30% or less, the synthesis gas being converted into a high value-added product, and thus, has poor productivity, there are limitations to utilizing or commercializing the process. Further, in terms of environmental protection, it is preferred to suppress CO₂ emission, but since the gasification reaction product of organic wastes contains CO₂ in addition to H₂ and CO, more carbon dioxide is emitted as compared with the case of landfill or pyrolysis treatment, and thus, the gasification process has a serious problem of causing rather increased environmental pollution.

Thus, there is a need for a method and an apparatus for producing a hydrocarbon, which may improve a production yield of synthesis gas which may be converted into a high value-added product during a gasification process of organic wastes and efficiently convert the synthesis gas into a high value-added hydrocarbon, while minimizing carbon dioxide emissions.

### [Disclosure]

### [Technical Problem]

An object of the present disclosure is to provide a method and an apparatus for producing a hydrocarbon from organic wastes, which have a significantly improved production yield of hydrocarbon.

Another object of the present disclosure is to provide a method and an apparatus for producing a hydrocarbon, which have a significantly improved process yield.

Still another object of the present disclosure is to provide a method and an apparatus for producing a hydrocarbon, which may minimize carbon dioxide emissions.

### [Technical Solution]

In one general aspect, a method for producing a hydrocarbon includes: (S1) heat-treating organic wastes in a pyrolysis reactor to produce a first mixed gas; (S2) methane reforming the first mixed gas in a reforming reactor to produce a second mixed gas; (S3) separating the second mixed gas into a first stream including carbon dioxide and a second stream including hydrogen and carbon monoxide; (S4) adding the first stream and carbon to a reverse Boudouard reactor to convert them into carbon monoxide through a reverse Boudouard reaction; (S5) mixing the second stream and the carbon monoxide converted in (S4) to produce a third mixed gas; (S6) producing a synthesis gas from the third mixed gas through a water gas shift reaction; and (S7) producing a hydrocarbon from the synthesis gas through a catalytic reaction, wherein the reforming reactor in (S2) includes a fluidized bed reforming reactor and a fixed bed reforming reactor connected in parallel, and the first mixed gas is switched and supplied to the fluidized bed reforming reactor or the fixed bed reforming reactor.

In an example, when a C/O element ratio is at or above a threshold value, the first mixed gas may be switched to the fluidized bed reforming reactor and fed to a feed, and when the C/O element ratio is below the threshold value, the first mixed gas may be switched to the fixed bed reforming reactor and fed to a feed.

In an example, the threshold value may be 0.5 to 0.9.

In an example, in the reverse Boudouard reactor, a fluidized bed reverse Boudouard reactor and a fixed bed reverse Boudouard reactor may be connected in parallel, and the first stream may be switched and supplied to the reverse Boudouard reactor.

In an example, the fluidized bed reverse Boudouard reactor of (S4) may be supplied with a coking catalyst of the fluidized bed reforming reactor as a carbon source, and the fixed bed reverse Boudouard reactor may be supplied with additional carbon as a separate carbon source.

In an example, the first mixed gas may further include one or more selected from landfill gas, shale gas, refinery exhaust gas, and biogas.

In an example, the synthesis gas in (S6) may include hydrogen and carbon monoxide, and a ratio between hydrogen and carbon monoxide may satisfy 1.8:1 to 2.2:1.

In an example, the catalytic reaction of (S7) may be a Fischer-Tropsch reaction.

In an example, the catalytic reaction of (S7) may be a methanol and olefin conversion reaction.

In an example, the hydrocarbon produced in (S7) may be a synthetic petroleum.

In an example, the hydrocarbon produced in (S7) may be a light olefin.

In an example, the methane reforming may be performed at a temperature of 700°C to 1000°C.

In an example, the reverse Boudouard reaction may be performed at a temperature of 600°C to 1000°C and a pressure of 50 KPa to 300 KPa.

In an example, the organic wastes in (S1) may be any one or two or more selected from waste plastic, solid wastes, biomass, waste oil or waste tires, and standard plastic garbage bags.

In an example, a step of purifying the first mixed gas of (S1) may be further included before (S2).

In another general aspect, an apparatus for producing a hydrocarbon includes: a pyrolysis reactor which heat-treats organic wastes to produce a first mixed gas; a reforming reactor which methane reforms the first mixed gas to produce a second mixed gas; a carbon dioxide separation unit which separates the second mixed gas into a first stream including carbon dioxide and a second stream including hydrogen and carbon monoxide; a reverse Boudouard reactor which converts the first stream into carbon monoxide through a reverse Boudouard reaction; a gas mixing unit which mixes the second stream and carbon monoxide converted in the reverse Boudouard reactor to produce a third mixed gas; a synthesis gas production unit which converts the third mixed gas into a synthesis gas through a water gas shift reaction; and a hydrocarbon conversion unit which converts the synthesis gas into a hydrocarbon under a catalyst, wherein the reforming reactor includes a fluidized bed reforming reactor and a fixed bed reforming reactor connected in parallel, and the first mixed gas discharged from the pyrolysis reactor is switched by a switching valve and supplied to the fluidized bed reforming reactor or the fixed bed reforming reactor.

In an example, a purification unit may be further included between the pyrolysis reactor and the reforming reactor.

In an example, the reverse Boudouard reactor may include the fluidized bed reverse Boudouard reactor and the fixed bed reverse Boudouard reactor placed in parallel, and the first stream may be switched and selectively supplied to the fluidized bed reverse Boudouard reactor or the fixed bed reverse Boudouard reactor.

In an example, the apparatus for producing a hydrocarbon may further include a cyclone connected between the fluidized bed reforming reactor and the carbon dioxide separation unit; a catalyst supply line which connects the cyclone and the fluidized bed reverse Boudouard reactor; and a catalyst recirculation line which connects the fluidized bed reverse Boudouard reactor and the fluidized bed reforming reactor, wherein the cyclone separates the second mixed gas and the catalyst discharged from the fluidized bed reforming reactor, supplies the second mixed gas to the carbon dioxide separation unit, and supplies the catalyst to the fluidized bed reverse Boudouard reactor.

### [Advantageous Effects]

According to an exemplary embodiment of the present disclosure, a production yield of a hydrocarbon from organic wastes may be significantly improved.

According to an exemplary embodiment of the present disclosure, hydrocarbon conversion may be performed using appropriate process and apparatus according to a C/O element ratio of a feed, thereby significantly improving production efficiency of the hydrocarbon.

According to an exemplary embodiment of the present disclosure, carbon dioxide emissions may be minimized in a production process of a hydrocarbon.

### [Description of Drawings]

FIG. 1 is a schematic diagram showing an apparatus for producing a hydrocarbon according to the present disclosure.
FIG. 2 is a schematic diagram showing an apparatus for producing a hydrocarbon including fixed bed and fluidized bed reverse Boudouard reactors, as an implementation example of the present disclosure.
FIG. 3 is a schematic diagram showing an apparatus for producing a hydrocarbon including a catalyst circulation process, as an implementation example of the present disclosure.
FIG. 4 is a schematic diagram showing an apparatus for producing a hydrocarbon including two carbon dioxide separation units, as an implementation example of the present disclosure.

### [Best Mode]

The singular form of the term used herein may be intended to also include a plural form, unless otherwise indicated.

The numerical range used in the present specification includes all values within the range including the lower limit and the upper limit, all double limited values, and all possible combinations of the upper limits and the lower limits in the numerical range defined in different forms. Unless otherwise defined in the present specification, values which may be outside a numerical range due to experimental error or rounding off of a value are also included in the defined numerical range.

The term "comprise" mentioned in the present specification is an open-ended description having a meaning equivalent to the term such as "is/are provided", "contain", "have", or "is/are characterized", and does not exclude elements, materials, or processes which are not further listed.

The unit of % used in the present specification without particular mention refers to % by weight, unless otherwise defined. The unit of ppm used without particular definition in the present specification refers to ppm by mass.

As a conventional process for manufacturing synthesis gas, a gasification process using a catalyst has been carried out, but due to the formation of coke and the like in the gasification process, the catalyst is deactivated causing process trouble by the deactivated catalyst during a continuous operation. In addition, for securing economic feasibility, relatively expensive catalysts need to be recovered, but in order to recover catalyst discharged in the state in which coke is agglomerated, a plurality of subsequent processes (such as air burning) should be carried out, which significantly deteriorates process efficiency, and a large amount of carbon dioxide is emitted during the process causing environmental pollution. In addition, since the conventionally performed gasification process of organic wastes has a significantly low production yield of synthesis gas and poor productivity, there were limits to conversion of the synthesis gas into a high value-added product. Thus, the inventors of the present disclosure devised a production method and production apparatus which may efficiently produce hydrocarbons from organic wastes while minimizing carbon dioxide emissions.

The present disclosure provides a method for producing a hydrocarbon including: (S1) heat-treating organic wastes in a pyrolysis reactor to produce a first mixed gas; (S2) methane reforming the first mixed gas in a reforming reactor to produce a second mixed gas; (S3) separating the second mixed gas into a first stream including carbon dioxide and a second stream including hydrogen and carbon monoxide; (S4) adding the first stream and carbon to a reverse Boudouard reactor to convert them into carbon monoxide through a reverse Boudouard reaction; (S5) mixing the second stream and the carbon monoxide converted in (S4) to produce a third mixed gas; (S6) producing a synthesis gas from the third mixed gas through a water gas shift reaction; and (S7) producing a hydrocarbon from the synthesis gas through a catalytic reaction, wherein the reforming reactor in (S2) includes a fluidized bed reforming reactor and a fixed bed reforming reactor connected in parallel, and the first mixed gas is switched and supplied to the fluidized bed reforming reactor or the fixed bed reforming reactor.

Since the method for producing a hydrocarbon according to the present disclosure may convert organic waste plastics into a synthesis gas with high efficiency as compared with a conventional gasification process, a yield of a high value-added hydrocarbon converted from the synthesis gas may be maximized. In addition, since carbon dioxide occurring in a process of producing a synthesis gas may be converted into a raw material of a synthesis gas, carbon dioxide emission may be minimized in a hydrocarbon production process to prevent environmental pollution.

(S1) is a step of heat treating organic wastes to produce a first mixed gas, in which a gasification reaction of the organic wastes may occur.

In an example, the organic wastes in (S1) is may be one or more selected from the group consisting of waste plastic, solid waste, biomass, waste oil, waste tire, and standard plastic garbage bags.

Specifically, any one or two or more gasification reactions selected from the following Reaction Formulae 1 to 4 may be involved in (S1):

[Reaction Formula 1] CₓH_{y} + H₂O → H₂ + CO (water gasification reaction)

[Reaction Formula 2] CₓH_{y} + CO₂ → CO (carbon dioxide gasification reaction)

[Reaction Formula 3] CO + 3H₂ → CH₄ + H₂O (methanation reaction)

[Reaction Formula 4] CₓH_{y} + O₂→ CO₂ (oxidation reaction).

In an example, the first mixed gas may include methane, hydrogen, carbon monoxide, and carbon dioxide. Besides, various impurities such as water vapor, nitrogen oxides, sulfur oxides, and hydrogen chloride may be included.

In an example, (S1) may be performed in a first catalyst condition or a non-catalytic condition in order to increase a methane content in the composition of the first mixed gas. Since it may be advantageous in terms of methane reforming reaction efficiency or synthesis gas production yield to increase a methane content in the composition of the first mixed gas, in order to increase the methane content in (S1), an acid site catalyst or molybdenum series forming catalyst may be used as a bed material of a gasifier. When the catalyst is not used, the operation may be performed with an increased methane content by operating the gasifier under the high temperature and high pressure conditions. The yield improvement effect from methane reforming may be expected identically in a C2 to C4 hydrocarbon gas content as well as the methane content, and the C2 to C4 gas content may also be increased by using the acid site catalyst or through low temperature and high pressure gasification operation.

In an example, the first catalyst may be an acid site catalyst or molybdenum-based forming catalyst. The acid site catalyst may be alumina or a catalyst having a solid acid site derived from a structure. The alumina may be alumina alone, silica-alumina, alumina dispersed in a carbon structure, and the like, and the structure acid site material may be zeolite, SAPO, AlPO, MOF, a structural variant thereof, and the like. The molybdenum-based catalyst refers to a catalyst in which molybdenum is supported on a support, and if necessary, nickel, cobalt, and the like may be added, or tungsten may be used instead of molybdenum. Any support may be used as long as it has durability to support an active metal, and for example, it may include materials including one or more selected from silica, alumina, silica-alumina, carbon, and zirconia.

As another example of increasing the methane content in the first mixed gas, the first mixed gas may further include one or more selected from landfill gas, shale gas, refinery exhaust gas, and biogas. Since the landfill gas, shale gas, refinery exhaust gas, and biogas include 40 vol or more, specifically 50 vol% or more of methane and carbon dioxide, the first mixed gas further includes the gas described above, and thus, the production yield of synthesis gas may be further improved through a methane reforming reaction and a reverse Boudouard reaction.

In an example, a step of purifying the first mixed gas may be further included, after (S1).

The first mixed gas produced by heat-treating organic wastes may include one or two or more impurities selected from the group consisting of tar, sulfur, nitrogen, and chlorine. Specifically, the first mixed gas may include water-soluble impurities such as H₂S, HCl, HOCl, and NH₃ and water-insoluble impurities such as tar. Since these impurities included in the first mixed gas may induce deactivation of the catalyst to reduce the efficiency of a subsequent process, when purification is performed after removing impurities from the first mixed gas, the efficiency of the entire process may be improved.

A method for purifying the first mixed gas may be one or a combination of two or more selected from the group consisting of use of a dust collection filter for high pressure, water washing, basic solution washing, passing through a ceramic filter, and the like, but is not limited thereto. When the water washing or basic solution washing is used, water-soluble impurities such as H₂S, HCl, HOCl, and NH₃ included in the first mixed may be removed, and when the first mixed gas is passed through a ceramic filter or a dust collection filter, water-insoluble impurities such as tar, dust, and the like may be removed.

(S2) is a step of reforming methane contained in the first mixed gas to produce a second mixed gas. In (S2), a reforming reaction according to the following Reaction Formula 5 may be involved:

[Reaction Formula 5] CH₄ + CO₂ → 2CO + 2H₂ (carbon dioxide reforming reaction).

The reforming reaction of (S2) may be performed at a temperature of 600°C to 1400°C and a pressure of 30 KPa to 2000 KPa.

(S2) may be operated without a catalyst, but may be operated using a catalyst in order to increase a reaction conversion rate at a low temperature of 600°C to 700°C. The catalyst of (S2) may be a composite catalyst in which a metal hydride is supported on a support. The metal hydride may include one or more selected from the group consisting of nickel, vanadium, iron, platinum, palladium, and ruthenium. As the metal hydride, commonly known metals such as nickel, vanadium, or iron may be used, and when an impurity content is low in a raw material, such as an organic waste, in the heat treatment process, a precious metal such as platinum, palladium, or ruthenium may be used.

In an example, the support may be a solid acid material such as oxides or zeolite. Specifically, the support may be one or more selected from the group consisting of ZSM-5, ZSM-11, USY zeolite, ferrierite, mordenite, MCM-22, SUZ-4, L-type zeolite, silica, alumina, silica-alumina, carbon, zirconia, and titania.

In an example, the reforming reactor in (S2) includes a fluidized bed reforming reactor and a fixed bed reforming reactor connected in parallel, and the first mixed gas may be switched and supplied to the fluidized bed reforming reactor or the fixed bed reforming reactor.

That is, the first mixed gas produced in (S1) may be supplied to the fluidized bed reforming reactor or the fixed bed reforming reactor of (S2) and performs the methane reforming reaction described above. Specifically, when a C/O element ratio of the first mixed gas produced in (S1) is at or above at threshold value, the first mixed gas is switched to the fluidized bed reforming reactor and supplied to a feed, and when the C/O element ratio is below the threshold value, the first mixed gas is switched to the fixed bed reforming reactor and supplied to the feed, thereby performing the reforming reaction of methane described above to produce a second mixed gas 200.

In an example, the threshold value may be 0.5 to 0.9, 0.6 to 0.85, or 0.7 to 0.8, and when the C/O ratio is at or above the threshold value, operation is performed by switching to a fluidized bed process, and when at or below the threshold value, operation is performed by switching to the fixed bed reactor.

In (S2), the reforming reaction of methane is performed in the fluidized bed reforming reactor or the fixed bed reforming reactor, thereby maximizing the methane reforming efficiency of the first mixed gas. Specifically, when the C/O element ratio of the first mixed gas is below the threshold value, a coke production amount produced by a side reaction may be small during the reforming reaction. Therefore, when the C/O element ratio in the first mixed gas is below the threshold value, it is advantageous to perform the reforming reaction in the fixed bed reforming reactor having the highest conversion rate per weight of the catalyst. Meanwhile, when the C/O element ratio of the first mixed gas is above the threshold value, a coke production amount produced by the side reaction is large during the reforming reaction, and thus, methane reforming efficiency may be lowered over time. Therefore, when the C/O element ratio in the first mixed gas is above the threshold value, the methane reforming efficiency may be increased by performing the methane reforming reaction in the fluidized bed reforming reactor, rather than performing the methane reforming reaction in the fixed bed reforming reactor. As such, since the present disclosure performs methane reforming in the fluidized bed reforming reactor or the fixed bed reforming reactor, the methane reforming reaction is performed in an advantageous process depending on the C/O element ratio contained in the first mixed gas, thereby maximizing the efficiency of the methane reforming reaction.

(S3) is a step of separating the second mixed gas into a first stream including carbon dioxide and a second stream including hydrogen and carbon monoxide.

In an example, a method for separating the second mixed gas into a first stream and a second stream is not limited as long as it is known in the art, but in the present disclosure, the separation may be performed using a carbon dioxide separation unit, and the carbon dioxide separation unit may be an amine scrubber. Usually, the amine scrubber is binding and removing carbon dioxide through an amine-based material, and since it may separate components such as carbon dioxide and hydrogen sulfide from gas steam and recover gas containing hydrogen, carbon monoxide, or inert gas, when the amine scrubber is used, the first mixed gas may be separated into the first stream and the second stream.

As another example, the carbon dioxide separation unit may be a carbon capture and storage (CCS) unit. When the CCS unit is used for separation of carbon dioxide, it may adsorb and separate carbon dioxide using an adsorbent including any one or two or more selected from calcium oxide, calcium hydroxide, dolomite, limestone, or trona, and thus, the second mixed gas may be separated into a first stream and a second streams using the carbon capture and storage (CCS) unit.

The first stream may include carbon dioxide at 40 vol% or more, 50 vol% or more, or 60 vol% or more as the lower limit and 99 vol% or less, 90 vol% or less, 80 vol% or less, or 70 vol% or less as the upper limit. Specifically, the first stream may include 40 to 99 vol%, more specifically 50 to 80 vol% of carbon dioxide. In the carbon dioxide separation unit, when carbon dioxide is captured and then separated, in order to separate carbon dioxide to a high purity, a regeneration tower in which carbon dioxide separation from an adsorbing material occurs should be designed with a high stage, and thus, more energy is consumed. Therefore, since the first stream has carbon dioxide in the range described above, a carbon dioxide separation process may be performed under slightly milder conditions.

(S4) is a step of converting the first stream separated in (S3) into carbon monoxide through a reverse Boudouard reaction. Since carbon dioxide contained in the first stream is further converted into carbon monoxide through the reverse Boudouard reaction, environmental pollution may be prevented in terms of decreasing emitted carbon dioxide, while maximizing the yield of synthesis gas. The reverse Boudouard reaction may involve the following Reaction Formula 6:

[Reaction Formula 6] C+CO₂ → 2CO.

In an example, in the reverse Boudouard reactor, a fluidized bed reverse Boudouard reactor and a fixed bed reverse Boudouard reactor are connected in parallel, and the first stream may be switched and supplied to the reverse Boudouard reactor. Specifically, when the fluidized bed reforming reactor is used in (S2), the first stream may be switched and supplied to the fluidized bed reverse Boudouard reactor in (S4), and when the fixed bed reforming reactor is used in (S2), the first stream may be switched and supplied to the fixed bed reverse Boudouard reactor in (S4).

First, the first mixed gas having a C/O element ratio at or above the threshold value is switched to the fluidized bed reforming reactor when performing the methane reforming reaction in (S2) and converted to the second mixed gas, and the second mixed gas may be separated into a first stream including carbon dioxide and a second stream including carbon monoxide and hydrogen through (S3), after being separated with the catalyst. Thereafter, when (S4) is performed, it is switched to the fluidized bed reverse Boudouard reactor, and the first stream may be supplied to the fluidized bed reverse Boudouard reactor and converted into carbon monoxide.

Likewise, the first mixed gas having a C/O element ratio at or below the threshold value may be switched to the fixed bed reforming reactor when performing (S2) and converted into the second mixed gas through a methane reforming reaction, and the second mixed gas may be separated into a first stream 210 including carbon dioxide and a second stream 211 including carbon monoxide and hydrogen through (S3). Thereafter, the first stream may be switched to the fixed bed reverse Boudouard reactor when performing (S4) and converted into carbon monoxide through the reverse Boudouard reaction.

When methane reforming is performed using the fluidized bed reforming reactor in (S2), the coking catalyst produced in the fluidized bed reforming reactor may be supplied in (S4) and used as a carbon source of the reverse Boudouard reactor, and thus, it may be advantageous to use the fluidized bed reverse Boudouard reactor in (S4). That is, when the coking catalyst of the fluidized bed reforming reactor is used as a carbon source, there is no need to further supply separate carbon to the fluidized bed reverse Boudouard reactor in (S4), and thus, economical process operation is allowed. Therefore, when the fluidized bed reforming reactor is used in (S2), it may be advantageous to use the fluidized bed reverse Boudouard reactor in (S4) in terms of process efficiency.

In addition, when a fixed bed reforming reactor is used in (S2), it may be advantageous in terms of improving the amount of synthesis gas produced to improve reactivity of the reverse Boudouard reaction using a fixed bed reverse Boudouard reactor having excellent reaction efficiency in (S4).

Since the present disclosure includes the fluidized bed and fixed bed reverse Boudouard reactors as described above, the reverse Boudouard reaction may be performed by selecting a reactor which may maximize process efficiency considering the previous process.

The reverse Boudouard reaction may be performed by being supplied with a carbon source from outside. Specifically, the carbon source may be char derived from the organic wastes, and more specifically, may be char derived from pyrolysis of waste plastic or biomass-derived char. Otherwise, in order to prevent a possibility of impurity gases flowing in by an external carbon source, high-purity graphite may be included.

(S5) is a step of mixing the second stream separated in the carbon dioxide separation unit and carbon monoxide converted by the reverse Boudouard reaction in (S4) to produce a third mixed gas.

The third mixed gas may include hydrogen and carbon monoxide.

(S6) is a process of adjusting a ratio between carbon monoxide and hydrogen in the third mixed gas through a water gas shift reaction to produce a synthesis gas. The third mixed gas may be converted through the water gas shift reaction so as to satisfy a ratio of hydrogen : carbon monoxide appropriate for a catalytic reaction as a subsequent process. The water gas shift reaction may involve the following Chemical Formula 7:

[Chemical Formula 7] CO + H₂O → H₂ + CO₂.

The water gas shift reaction may be performed under a catalyst including Fe and Cr. The water gas shift reaction may be performed at a temperature of 100°C to 400°C, specifically 100°C to 300°C and at 20 bar to 80 bar, specifically 25 bar to 70 bar.

The synthesis gas produced by the water gas shift reaction may have a ratio of hydrogen : carbon monoxide of 1.5 to 3:1, specifically 1.9 to 2.1:1. Since the ratio of hydrogen : carbon monoxide in the synthesis gas satisfies the range described above, a catalytic reaction process which is a subsequent process may be performed well.

(S7) is a step of converting the synthesis gas produced in (S6) into a hydrocarbon oil fraction, in which the synthesis gas may be converted into an appropriate hydrocarbon oil fraction by a catalytic reaction.

The catalytic reaction is not limited as long as it may convert the synthesis gas into a hydrocarbon oil fraction, but specifically, may be a Fischer-Tropsch reaction or a methanol and olefin conversion reaction.

In an example, when the catalytic reaction of (S7) is the Fischer-Tropsch reaction, a reaction involving the following Chemical Formula 8 may be performed using the synthesis gas produced in (S6) as a raw material:

[Chemical Formula 8] nCO + 2nH₂ → CₙH₂ₙ + nH₂O.

The Fischer-Tropsch reaction may be performed under a catalyst including cobalt, nickel, or iron, may include alumina, silica, titania, or the like as a support, and may include a precious metal such as Pt, Ru, and Re as a cocatalyst.

The Fischer-Tropsch reaction may be performed at a temperature of 100°C to 500°C, specifically 200°C to 350°C and at a pressure of 10 atm to 50 atm or 10 atm to 30 atm.

In an example, when the catalytic reaction of (S7) is a methanol and olefin conversion reaction, (S7) may include a reaction of converting the synthesis gas into methanol; and converting methanol into olefin.

The reaction of converting the synthesis gas into methanol may involve the following Chemical Formula 9:

[Chemical Formula 9] CO + 2H₂ → CH₃OH.

In an example, the reaction of converting the synthesis gas into methanol may be performed under a Cu-based catalyst. Specifically, the Cu-based catalyst may be a Fe-based methanol synthetic catalyst, and as a support of the Fe-based catalyst, one or more selected from the group consisting of SiO₂, ZrO₂, Ga₂O₃ Al₂O₃, MgO, and TiO₂ may be used. Specifically, the Cu-based methanol-based synthetic catalyst may be Cu/Zn/Al₂O₃.

The reaction of converting the synthesis gas into methanol may be performed at 200°C to 600°C, specifically 200°C to 500°C and at 0.1 MPa to 10 MPa, specifically 0.1 MPa to 5 MPa.

The reaction of converting methanol into olefin may be performed under a zeolite-based catalyst or an AlPO₄-based molecular sieve catalyst. Specifically, the zeolite-based catalyst may be ZSM-5, and the AlPO₄-based catalyst may be a silicoaluminaphosphate (SAPO) molecular sieve catalyst, specifically, one or more selected from SAPO-5, SAPO-8, SAPO-11, SAPO-16, SAPO-17, SAPO-18, SAPO-20, SAPO-31, SAPO-34, SAPO-35, SAPO-44, and SAPO-46.

The reaction of converting methanol into olefin may be performed at a temperature of 200°C to 600°C, specifically 300°C to 500°C and at a pressure of 1 bar to 10 bar, specifically 1 bar to 5 bar.

The present disclosure provides an apparatus for producing a hydrocarbon 1 includes: a pyrolysis reactor 10 which heat-treats organic wastes 100 to produce a first mixed gas 110; a reforming reactor 20 which methane reforms the first mixed gas 110 to produce a second mixed gas 200; a carbon dioxide separation unit 30 which separates the second mixed gas 200 into a first stream 210 including carbon dioxide and a second stream 211 including hydrogen and carbon monoxide; a reverse Boudouard reactor 40 which converts the first stream 210 into carbon monoxide through a reverse Boudouard reaction; a gas mixing unit 50 which mixes the second stream 211 and carbon monoxide converted in the reverse Boudouard reactor 40 to produce a third mixed gas 220; a synthesis gas production unit 60 which converts the third mixed gas 220 into a synthesis gas 230 through a water gas shift reaction; and a hydrocarbon conversion unit 70 which converts the synthesis gas 230 into a hydrocarbon under a catalyst, wherein the reforming reactor 20 includes a fluidized bed reforming reactor 21 and a fixed bed reforming reactor 22 connected in parallel, and the first mixed gas 110 discharged from the pyrolysis reactor 10 is switched by a switching valve and supplied to the fluidized bed reforming reactor 21 or the fixed bed reforming reactor 22.

The apparatus for producing a hydrocarbon 1 according to the present disclosure may select a reactor in a subsequent process between a fluidized bed reactor and a fixed bed reactor depending on the content of oxygen contained in gas produced by gasification of wastes, thereby efficiently converting gas produced by gasification of wastes into a hydrocarbon. In addition, carbon dioxide emitted as exhaust gas is captured and used as a manufacturing raw material of hydrocarbon, thereby significantly decreasing carbon dioxide emissions to prevent environmental pollution.

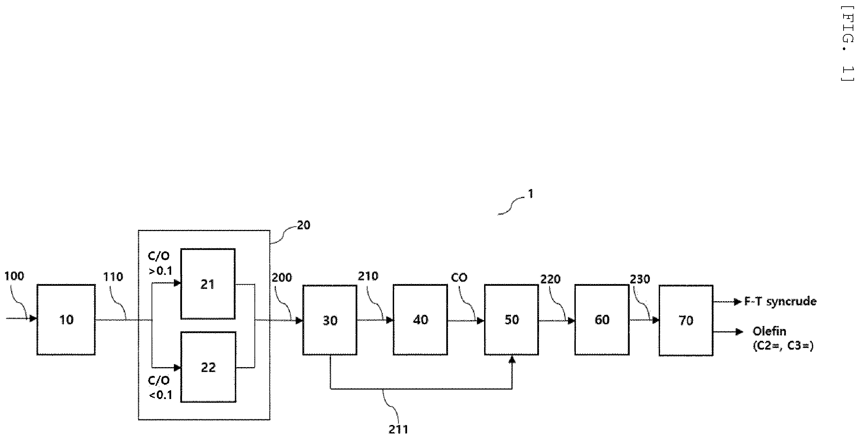

In an example, referring to FIG. 1, organic wastes 100 are introduced to a pyrolysis reactor 10 and heat treated to produce a first mixed gas 110. The first mixed gas 110 is supplied to the reforming reactor 20, and depending on the C/O element ratio in the first mixed gas 110, when the C/O element ratio is at or above the threshold value, the first mixed gas is introduced to the fluidized bed reforming reactor 21 by a switching valve, and when the C/O element ratio is below the threshold value, the first mixed gas 110 is introduced to the fixed bed reforming reactor 22 by the switching valve, and the first mixed gas 110 is converted into a second mixed gas 200 through the reforming reaction of methane.

When the first mixed gas 110 having the C/O element ratio below the threshold value is introduced, the switching valve connects the pyrolysis reactor 10 and the fixed bed reforming reactor 22 to adjust the first mixed gas 110 to be introduced to the fixed bed reforming reactor 22. In addition, when the first mixed gas 110 having the C/O element ratio at or above the threshold value is introduce, the switching valve connects the pyrolysis reactor 10 and the fluidized bed reforming reactor 21 to adjust the first mixed gas 110 to be introduced to the fluidized bed reforming reactor 21.

In the present disclosure, since the reforming reactor 20 includes the fluidized bed reforming reactor 21 and the fixed bed reforming reactor 22, and the reforming reaction may be performed in an appropriate reactor depending on the C/O element ratio of the first mixed gas 110 by the switching valve, the efficiency of the methane reforming reaction may be maximized.

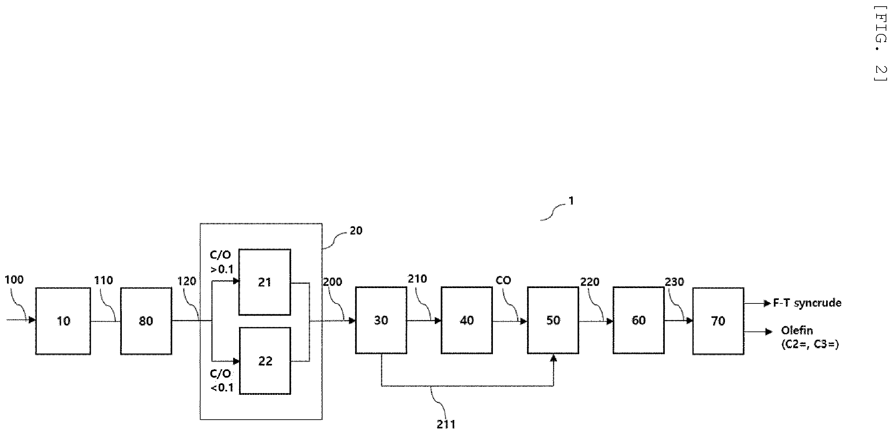

According to an example, the apparatus for producing a hydrocarbon 1 may further include a purification unit 80 between the pyrolysis reactor 10 and the reforming reactor 20. Referring to FIG. 2, the first mixed gas 110 is introduced to the purification unit 80 to remove impurities, and then the first mixed gas with impurities removed 120 is supplied to the reforming reactor 20 to perform a methane reforming reaction.

The purification unit 80 may remove water-soluble impurities such as H₂S, HCl, HOCl, and NH₃ by being supplied with the first mixed gas 110 from the pyrolysis reactor 10 by including a splinter which sprays a liquid and bringing the first mixed gas 110 and a weakly basic solution including water or sodium carbonate into contact, may remove dust using a dust collection filter for high pressure, or may remove water-insoluble impurities such as tar by including a ceramic filter.

The second mixed gas 200 produced by the methane reforming reaction in the reforming reactor 20 may be supplied to a carbon dioxide separation unit 30 and separated into the first stream 210 including carbon dioxide and the second stream 211 including hydrogen and carbon monoxide. Herein, the second stream 211 is supplied to a gas mixing unit 50, and the first stream 210 is supplied to the reverse Boudouard reactor and converted into carbon monoxide through the reverse Boudouard reaction.

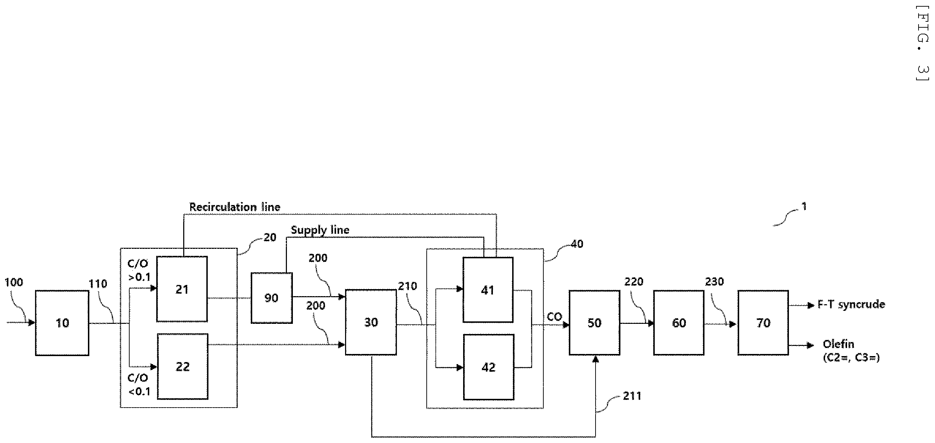

In an example, referring to FIG. 3, in the reverse Boudouard reactor 40, the fluidized bed reverse Boudouard reactor 41 and the fixed bed reverse Boudouard reactor 42 are connected in parallel, the fluidized bed reverse Boudouard reactor 41 and the fixed bed reverse Boudouard reactor 42 are switched, and the first stream 210 may be selectively supplied. Like the reforming reactor 20, the reverse Boudouard reactor 40 may also supply the first stream 210 to the fluidized bed reverse Boudouard reactor 41 or the fixed bed reverse Boudouard reactor 42 selectively through the switching valve to perform the reverse Boudouard reaction.

According to an example, when the reforming reaction is performed in the fluidized bed reforming reactor 21, the first stream 210 may be supplied to the fluidized bed reverse Boudouard reactor 41 to perform the reverse Boudouard reaction. Meanwhile, when the reforming reaction is performed in the fixed bed reforming reactor 22, the first stream 210 may be supplied to the fixed bed reverse Boudouard reactor 42 to perform the reverse Boudouard reaction. Like the reforming reactor, in the reverse Boudouard reactor, when the reforming reaction is performed in the fluidized bed reforming reactor 21 through the switching valve, the carbon dioxide separation unit 30 and the fluidized bed reverse Boudouard reactor 41 are connected, and the first stream 210 is supplied to the fluidized bed reverse Boudouard reactor 41 to perform the reverse Boudouard reaction. In addition, when the reforming reactor is performed in the fixed bed reforming reactor 22, the carbon dioxide separation unit 30 and the fixed bed reverse Boudouard reactor 42 are connected, and the first stream 210 is supplied to the fixed bed reforming reactor 42 to perform the reverse Boudouard reaction.

In an example, the apparatus for producing a hydrocarbon 1 may further include a cyclone 90 connected between the fluidized bed reforming reactor 21 and the carbon dioxide separation unit 30; a catalyst supply line which connects the cyclone 90 and the fluidized bed reverse Boudouard reactor 41; and a catalyst recirculation line which connects the fluidized bed reverse Boudouard reactor 41 and the fluidized bed reforming reactor 21, wherein the cyclone 90 separates the second mixed gas 200 and the catalyst discharged from the fluidized bed reforming reactor 21, supplies the second mixed gas 200 to the carbon dioxide separation unit 30, and supplies the catalyst to the fluidized bed reverse Boudouard reactor 41.

Referring to FIG. 3, the apparatus for producing a hydrocarbon 1 according to the present disclosure may further include the cyclone 90 between the fluidized bed reforming reactor 21 and the carbon dioxide separation unit 30, wherein the cyclone 90 is supplied with the second mixed gas 200 from the fluidized bed reforming reactor 21, separates the coking catalyst, and supplies the second mixed gas 200 to the separation unit 30, and the coking catalyst may be supplied to the fluidized bed reverse Boudouard reactor 41 along the catalyst supply line connected to the cyclone 90 and the fluidized bed reverse Boudouard reactor 21. In the fluidized bed reverse Boudouard reactor 41, the coking catalyst supplied from the cyclone 90 may be regenerated, and the regenerated catalyst may be supplied to the fluidized bed reforming reactor 21 again through a recirculation line connected to the fluidized bed reforming reactor 21. As such, when the cyclone 90 is further included, since there is no need to separately supply coke required for the reverse Boudouard reaction from the outside, economical process operation is allowed, the catalyst of the methane reforming reaction may be continuously resupplied, and thus, efficient process operation is allowed.

In an example, the fixed bed reverse Boudouard reactor 42 is connected between the carbon dioxide separation unit 30 and the gas mixing unit 50, and the fixed bed reverse Boudouard reactor 42 may further include a first fixed bed reverse Boudouard reactor and a second fixed bed reverse Boudouard reactor connected in parallel, and a control part which switches the first fixed bed reverse Boudouard reactor and the second fixed bed reverse Boudouard reactor.

The control part may control performance of a first mode in which the first fixed bed reverse Boudouard reactor is regenerated by blocking the connection of the carbon dioxide separation unit - the first fixed bed reverse Boudouard reactor - the gas mixing unit, and the reverse Boudouard reaction is performed by the second fixed bed reverse Boudouard reactor.

In addition, the control part may control performance of a second mode in which the second fixed bed reverse Boudouard reactor is regenerated by blocking the connection of the carbon dioxide separation unit - the second fixed bed reverse Boudouard reactor - the gas mixing unit, and the reverse Boudouard reaction is performed by the first fixed bed reverse Boudouard reactor.

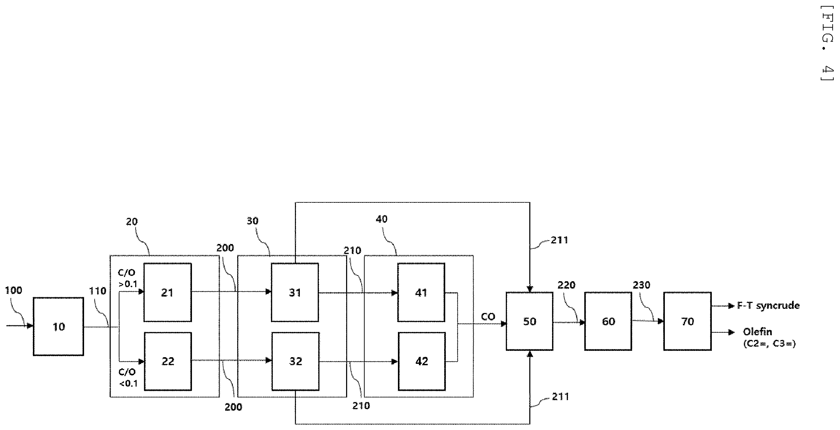

Referring to FIG. 4, the carbon dioxide separation unit 30 of the apparatus for producing a hydrocarbon 1 according to the present disclosure may include a first carbon dioxide separation unit 31 which is connected between the fluidized bed reforming reactor 21 and the fluidized bed reverse Boudouard reactor 41 and a second carbon dioxide separation unit 32 which is connected between the fixed bed reforming reactor 22 and the fixed bed reverse Boudouard reactor 42 and aligned parallel to the first carbon dioxide separation unit 31.

When the carbon dioxide 30 includes the first carbon dioxide separation unit 31 and the second carbon dioxide separation unit 32, the first mixed gas 110 is supplied to the gas mixing unit 50 through the fluidized bed reforming reactor 21 - the first carbon dioxide separation unit 31 - the fluidized bed reverse Boudouard reactor 41, or supplied to the gas mixing unit 50 through the fixed bed reforming reactor 22 - the second carbon dioxide separation unit 32 - the fixed bed reverse Boudouard reactor 42. When the apparatus for producing a hydrocarbon includes the two reforming reactors, the two carbon dioxide separation units, and the two reverse Boudouard reactors, two processes may be operated simultaneously depending on the C/O element ratio threshold value in the first mixed gas 110, and thus, a continuous process may be operated even when the C/O element ratio value of the first mixed gas is changed.

In a gas mixing unit 50, the second stream 211 separated from the carbon dioxide separation unit 30 and carbon monoxide converted in the reverse Boudouard reactor 40 are mixed to produce a third mixed gas 220.

The produced third mixed gas 220 is converted into a synthesis gas 230 by adjusting a ratio between hydrogen and carbon monoxide in the third mixed gas 220 through a water gas shift reaction in a synthesis gas production unit 60.

The synthesis gas 230 is introduced to the hydrocarbon conversion unit 70, converted into a hydrocarbon through a Fisher-Tropsch reaction or a methanol and olefin conversion reaction, and recovered into a high value-added oil fraction.

In an example, when the hydrocarbon conversion unit 70 performs a methanol and olefin conversion reaction, the hydrocarbon conversion unit 70 may include a methanol conversion unit which is supplied with the synthesis gas 230 and converts the synthesis gas into methanol and an olefin conversion unit which is supplied with methanol from the methanol conversion unit and converts methanol into an olefin.

In an example, the apparatus for producing a hydrocarbon may be connected to a hydrocarbon conversion unit 70 and further include a separation step of separating the produced hydrocarbon into oil fractions at each boiling point through distillation.

Hereinafter, the examples of the present disclosure will be further described with reference to the specific experimental examples. It is apparent to those skilled in the art that the examples and the comparative examples included in the experimental examples are only for illustrating the present disclosure and do not limit the appended claims, and various modifications and alterations of the examples may be made within the range of the scope and spirit of the present disclosure, and these modifications and alterations will fall within the appended claims.

### (Example 1)

1000 g of municipal solid wastes were added to a pyrolysis reactor, and water vapor was introduced at a temperature of 1200°C and a pressure of 250 KPa under an alumina bed and then heat treated to recover a first mixed gas having a C/O ratio of 0.69.

The mixed gas was cooled, added to a purification unit (wet scrubber), and treated at 70°C and 100 KPa to remove impurities, and a purified mixed gas was recovered. As a result of treating the mixed gas through the wet scrubber, impurity gases such as NH₃, HCl, H₂S, and COS were not analyzed in the mixed gas.

The purified first mixed gas was supplied to the fixed bed reforming reactor including 100 g of a Ni/Al₂O₃ catalyst at a space velocity of 2 L/g_{cat}·h to produce a second mixed gas through dry reforming of methane. Specifically, a fixed bed reforming reactor filled with the catalyst was supplied with H₂ at a flow rate of 3.03 Nl/min at 900°C, reduction was performed for 2 hours, and then the first mixed gas was supplied to the fixed bed reforming reactor at a flow rate of 3.33 Nl/min to perform a dry reforming reaction as a continuous process.

The Ni/Al₂O₃ catalyst was produced by impregnating an aqueous solution of nickel nitrate hexahydrate dissolved in distilled water with alumina having a diameter of 1 mm, drying at 150°C for 2 hours, and then continuously firing at 500°C for 2 hours. The process was set to a unit process, and the unit process was repeated multiple times until the nickel content in the catalyst was 20 wt%. The nickel content in the catalyst was measured through C-ray fluorescence spectrometry (XRF) analysis, and the XRF analysis was performed using ARL QUANT'X available from Thermo.

Water was removed from the recovered second mixed gas, which was introduced to the amine scrubber. Carbon dioxide included in the second mixed gas was captured in the amine scrubber, and the second mixed gas with carbon dioxide removed was separated as a second stream. Specifically, the second mixed gas was introduced to the first amine scrubber to capture CO₂ using an aqueous solution (amine solution) in which 12 wt% of NH₃ was dissolved at 50 to 60°C, 10 to 20 bar, and a throughput of 0.5 Nl/hr, and non-captured gas was recovered as the second stream. The amine solution in the first amine scrubber was introduced to the second amine scrubber and separated into an amine solution and CO₂ at 100°C, and CO₂ was recovered as the first stream.

The recovered first stream was continuously supplied to a fixed bed reverse Boudouard reactor filled with a Ni/Al₂O₃ catalyst and 5 kg of high-purity graphite, and carbon dioxide was converted into carbon monoxide through the reverse Boudouard reaction. The reverse Boudouard reaction was performed in the conditions of 750°C, a CO₂ flow rate of 2.33 Nl/min, and a space velocity of 2.0 L/g_{cat}·h under N₂ gas.

The carbon monoxide converted from the first stream and the second stream separated from the amine scrubber were introduced to the gas mixing unit and mixed at 200°C to produce a third mixed gas. The third mixed gas was introduced to a synthesis gas production unit to produce the synthesis gas having a mole ratio of H₂:CO=2:1 through a water gas shift reaction. The water gas shift reaction was performed in the conditions of 165°C, 35 bar, and a space velocity of 1.4 L/g_{cat}·h under a Cu/Zn/Al₂O₃ catalyst.

The synthesis gas was supplied to a hydrocarbon conversion unit, an injection speed was set so that a space velocity was 5000L/kg_{cat}·h, a volume ratio of carbon monoxide: hydrogen: argon was 63.2: 31.3: 5.5 under a Co/ZnO (cobalt zinc oxide) catalyst, and Fischer-Tropsch reaction was performed at a reaction temperature of 300°C and a pressure of 10 bar for 60 hours to recover a hydrocarbon oil fraction.

### (Example 2)

A hydrocarbon was produced in the same manner as in Example 1, except that after recovering the first mixed gas having a C/O ratio of 0.87, the reactor was switched to perform the dry reforming reaction and the reverse Boudouard reaction in the fluidized bed reactor.

Specifically, the Ni/Al₂O₃ fluidized bed catalyst was produced by the following procedures. 1 part by weight of formic acid was added to a mixed solution of 10 parts by weight of pseudo-boehmite alumina and 95 parts by weight of nickel nitrate hexahydrate based on 100 parts by weight of water with stirring, and the reaction was performed for 3 hours to perform gelation, thereby producing a precursor gel. 30 parts by weight of clay and 1.5 parts by weight of a MgO oxide were added and mixed with a homogenizer to produce a solid mixture, which was mixed with the precursor gel, and then 10 parts by weight of colloidal silica (Ludox AS40, Aldrich) was added, 5 parts by weight of water was further added, and vigorous stirring was performed to produce a composite catalyst sol. The composite catalyst sol was spray dried to produce a fluidized bed catalyst.

The fluidized bed reforming reactor was filled with 100 g of the Ni/Al₂O₃ catalyst, reduction was performed for 2 hours while H₂ was supplied at a flow rate of 3.03 Nl/min at 900°C, and then operation was performed at a throughput of 2.0 L/g_{cat}·h while the first mixed gas purified to a total flow rate of 3.33 Nl/min was introduced to recover the second mixed gas.

After the catalyst was separated from the second mixed gas of the fluidized bed reforming reactor using a cyclone, CO₂ was separated using an amine scrubber, and a second stream from which the catalyst and carbon dioxide had been separated was recovered. Specifically, the second mixed gas was introduced the first amine scrubber to capture CO₂ in an aqueous solution (amine solution) in which monoethanolamine (MEA) was dissolved at 50°C, and uncaptured gas was recovered as a second stream. The amine solution in the first amine scrubber was introduced to the second amine scrubber and separated into an amine solution and CO₂ at 100°C, and CO₂ was recovered as a first stream.

The recovered first stream was introduced to the fluidized bed reverse Boudouard reactor and converted into carbon monoxide through a reverse Boudouard reactor. The reverse Boudouard reaction was performed in a fluidized bed reactor filled with a Ni/Al₂O₃ catalyst and performed by supplying the first stream at a space velocity of 2 L/g_{cat}·h, and at this time, a catalyst which was used in the dry reforming process and had activated carbon and coke deposited was added as a carbon source, and the activated catalyst by removing coke through the reverse Boudouard reaction was added again to the first fluidized bed reactor through a recirculation line. The insufficient coke was replenished by further adding high-purity graphite. Unconverted CO₂ after the reverse Boudouard reaction was separately recovered by the amine scrubber.

### (Example 3)

A hydrocarbon was produced in the same manner as in Example 2, except that the first mixed gas having the C/O ratio of 1.19 was used.

### (Comparative Example 1)

A hydrocarbon was produced in the same manner as in Example 1, except that the first mixed gas having the C/O ratio of 0.87 was used.

### (Comparative Example 2)

A hydrocarbon was produced in the same manner as in Example 1, except that the first mixed gas having the C/O ratio of 1.19 was used.

The compositions depending on the C/O ratio of the first mixed gases recovered in Examples 1 to 3 and Comparative Examples 1 and 2 are listed in Table 1.

**[Table 1]**

| First mixed gas | Example 1 | Example 2 and Comparative Example 1 | Example 3 and Comparative Example 2 |
|---|---|---|---|
| C/O mole ratio | 0.69 | 0.87 | 1.19 |
| H₂ | 4.83 | 5.53 | 3.26 |
| CO | 2.42 | 2.88 | 1.63 |
| CO₂ | 1.67 | 2.61 | 6.06 |
| CH₄ | 6.24 | 4.1 | 4.2 |

### (Experimental Example 1) Evaluation of reforming reaction

The catalyst reaction activity, the stability, and the coke production amount occurring during the methane reforming reaction, when the hydrocarbon was produced by the methods of Examples 1 to 3 and Comparative Examples 1 and 2, were evaluated. The coke production amount was measured by, after finishing the methane reforming reaction, recovering an inactive catalyst to measure the weight, oxidizing the inactive catalyst at 550°C under an air atmosphere to remove coke, measuring the weight, and checking a difference in weight before and after removing the coke to qualify the amount of coke deposited in the catalyst.

In Example 1, though the methane reforming reaction was operated for 20 days, catalyst deactivation did not occur, and coke was not produced in the catalyst. Thus, it was found that the first mixed gas having the C/O ratio of 0.69 maintained excellent reforming performance for a long time in a fixed bed reactor.

However, in Comparative Example 1 in which the methane reforming reaction was performed in the fixed bed reactor using the first mixed gas having the C/O ratio of 0.87, the reactor was not switched even when the C/O ratio was above the threshold value, the catalyst was deactivated when operated for 5 days, and the methane conversion rate was lowered to 30% or less. Specifically, since coke was included at 9 wt% as compared with the total weight of the catalyst, the coke was deposited in the catalyst, and methane reforming performance was very low.

In Comparative Example 2 also, though the C/O ratio of the first mixed gas was 1.19 which was above the threshold value, the methane reforming reaction was performed in the fixed bed without switching the reactor. Thus, the catalytic activity was rapidly decreased to 66% within 2 hours, and 22 wt% of coke was deposited as compared with the total weight of the catalyst to deactivate the catalyst.

However, as in Examples 2 and 3, when the first mixed gas having the C/O ratio of 0.87 and 1.19, respectively was recovered, and then the reactor was switched to perform the dry reforming and the reverse Boudouard reaction in the fluidized bed reactor, the catalyst was regenerated by adding the deactivated catalyst by the carbon component deposited by the dry reforming reaction to the reverse Boudouard reactor. Since the regenerated catalyst was added to the fluidized bed reforming reactor again and then used, high catalytic efficiency was maintained. That is, it was found that since a catalyst may be regenerated through a circulation process in the fluidized bed reactor, even when the catalyst was deactivated by the reforming reaction, high reaction activity and reaction stability were shown.

Thus, process efficiency may be significantly improved by connecting the fixed bed reactor and the fluidized bed reactor in parallel to adopt an appropriate reactor depending on the C/O element ratio of the first mixed gas and perform the reforming reaction and the reverse Boudouard reaction. When the C/O ratio of the first mixed gas was below the threshold value, the reforming reaction and the reverse Boudouard reaction were performed using the fixed bed reactor having benefits of low operating costs, high productivity, and easy management, and when the C/O ratio of the first mixed gas was at or above the threshold value, switching to the fluidized bed reactor to allow a catalyst circulation process was performed to improve reaction stability.

The above description is only an example to which the principle of the present disclosure is applied, and other constitutions may be further included without departing from the scope of the present disclosure.

**[Detailed Description of Main Elements]**

| | | | |
|---|---|---|---|
| 1: | Apparatus for producing hydrocarbon | 10: | Pyrolysis reactor |
| 20: | Reforming Reactor | 21: | Fluidized bed reforming reactor |
| 22: | Fixed bed reforming reactor | 30: | Carbon dioxide separation unit |
| 31: | First carbon dioxide separation unit | 32: | Second carbon dioxide separation unit |
| 40: | Reverse Boudouard reactor | 41: | Fluidized bed |
| | | | reverse Boudouard reactor |
| 42: | Fixed bed reverse Boudouard reactor | 50: | Gas mixing unit |
| 60: | Synthesis gas production unit | 70: | Hydrocarbon conversion unit |
| 80: | Purification unit | 90: | Cyclone |
| 100: | Organic wastes | 110: | First mixed gas |
| 120: | First mixed gas with impurity removed | 200: | Second mixed gas |
| 210: | First stream | 211: | Second stream |
| 220: | Third mixed gas | 230 | Synthesis gas |

## Claims

1. A method for producing a hydrocarbon, the method comprising:
(S1) heat-treating organic wastes in a pyrolysis reactor to produce a first mixed gas;
(S2) methane reforming the first mixed gas in a reforming reactor to produce a second mixed gas;
(S3) separating the second mixed gas into a first stream including carbon dioxide and a second stream including hydrogen and carbon monoxide;
(S4) adding the first stream and carbon to a reverse Boudouard reactor to convert them into carbon monoxide through a reverse Boudouard reaction;
(S5) mixing the second stream and the carbon monoxide converted in (S4) to produce a third mixed gas;
(S6) producing a synthesis gas from the third mixed gas through a water gas shift reaction; and
(S7) producing a hydrocarbon from the synthesis gas through a catalytic reaction,
wherein the reforming reactor in (S2) includes a fluidized bed reforming reactor and a fixed bed reforming reactor connected in parallel, and the first mixed gas is switched and supplied to the fluidized bed reforming reactor or the fixed bed reforming reactor.

2. The method for producing a hydrocarbon of claim 1, wherein when a C/O element ratio is at or above a threshold value, the first mixed gas is switched to the fluidized bed reforming reactor and fed to a feed, and when the C/O element ratio is below the threshold value, the first mixed gas is switched to the fixed bed reforming reactor and fed to a feed.

3. The method for producing a hydrocarbon of claim 2, wherein the threshold is 0.5 to 0.9.

4. The method for producing a hydrocarbon of claim 1, wherein in the reverse Boudouard reactor, a fluidized bed reverse Boudouard reactor and a fixed bed reverse Boudouard reactor are connected in parallel, and the first stream is switched and supplied to the reverse Boudouard reactor.

5. The method for producing a hydrocarbon of claim 4, wherein the fluidized bed reverse Boudouard reactor of (S4) is supplied with a coking catalyst of the fluidized bed reforming reactor as a carbon source, and the fixed bed reverse Boudouard reactor is supplied with additional carbon as a separate carbon source.

6. The method for producing a hydrocarbon of claim 1, wherein the first mixed gas further includes one or more selected from landfill gas, shale gas, refinery exhaust gas, and biogas.

7. The method for producing a hydrocarbon of claim 1, wherein the synthesis gas in (S6) includes hydrogen and carbon monoxide, and a ratio between the hydrogen and the carbon monoxide satisfies 1.8:1 to 2.2:1.

8. The method for producing a hydrocarbon of claim 1, wherein the catalytic reaction of (S7) is a Fischer-Tropsch reaction.

9. The method for producing a hydrocarbon of claim 1, wherein the catalytic reaction of (S7) is a methanol and olefin conversion reaction.

10. The method for producing a hydrocarbon of claim 8, wherein the hydrocarbon produced in (S7) is synthetic petroleum.

11. The method for producing a hydrocarbon of claim 9, wherein the hydrocarbon produced in (S7) is a light olefin.

12. The method for producing a hydrocarbon of claim 1, wherein the methane reforming is performed at a temperature of 700°C to 1000°C.

13. The method for producing a hydrocarbon of claim 1, wherein the reverse Boudouard reaction is performed at a temperature of 600°C to 1000°C and a pressure of 50 KPa to 300 KPa.

14. The method for producing a hydrocarbon of claim 1, wherein the organic wastes in (S1) are any one or two or more selected from waste plastic, solid wastes, biomass, waste oil or waste tires, and standard plastic garbage bags.

15. The method for producing a hydrocarbon of claim 1, further comprising: purifying the first mixed gas of (S1) before (S2).

16. An apparatus for producing a hydrocarbon comprising:
a pyrolysis reactor which heat-treats organic wastes to produce a first mixed gas;
a reforming reactor which methane reforms the first mixed gas to produce a second mixed gas;
a carbon dioxide separation unit which separates the second mixed gas into a first stream including carbon dioxide and a second stream including hydrogen and carbon monoxide;
a reverse Boudouard reactor which converts the first stream into carbon monoxide through a reverse Boudouard reaction;
a gas mixing unit which mixes the second stream and carbon monoxide converted in the reverse Boudouard reactor to produce a third mixed gas;
a synthesis gas production unit which converts the third mixed gas into a synthesis gas through a water gas shift reaction; and
a hydrocarbon conversion unit which converts the synthesis gas into a hydrocarbon under a catalyst,
wherein the reforming reactor includes a fluidized bed reforming reactor and a fixed bed reforming reactor connected in parallel, and the first mixed gas discharged from the pyrolysis reactor is switched by a switching valve and supplied to the fluidized bed reforming reactor or the fixed bed reforming reactor.

17. The apparatus for producing a hydrocarbon of claim 16, further comprising: a purification unit between the pyrolysis reactor and the reforming reactor.

18. The apparatus for producing a hydrocarbon of claim 16, wherein the reverse Boudouard reactor includes the fluidized bed reverse Boudouard reactor and the fixed bed reverse Boudouard reactor placed in parallel, and the first stream is switched and selectively supplied to the fluidized bed reverse Boudouard reactor or the fixed bed reverse Boudouard reactor.

19. The apparatus for producing a hydrocarbon of claim 18, further comprising:
a cyclone connected between the fluidized bed reforming reactor and the carbon dioxide separation unit;
a catalyst supply line which connects the cyclone and the fluidized bed reverse Boudouard reactor; and
a catalyst recirculation line which connects the fluidized bed reverse Boudouard reactor and the fluidized bed reforming reactor,
wherein the cyclone separates the second mixed gas and the catalyst discharged from the fluidized bed reforming reactor, supplies the second mixed gas to the carbon dioxide separation unit, and supplies the catalyst to the fluidized bed reverse Boudouard reactor.
